(19) Europäisches Patentamt / European Patent Office / Office européen des brevets

(11) **EP 2 137 392 B1**

(12) **FASCICULE DE BREVET EUROPEEN**

(45) Date de publication et mention
de la délivrance du brevet:
**28.11.2012 Bulletin 2012/48**

(21) Numéro de dépôt: **08788143.9**

(22) Date de dépôt: **08.04.2008**

(51) Int Cl.:
*F02D 41/00* (2006.01)      *F02D 19/08* (2006.01)
*G01L 23/30* (2006.01)      *G01M 15/08* (2006.01)

(86) Numéro de dépôt international:
**PCT/FR2008/050621**

(87) Numéro de publication internationale:
**WO 2008/139113 (20.11.2008 Gazette 2008/47)**

(54) **PROCEDE D'ESTIMATION DU TAUX D'ETHANOL D'UN CARBURANT**

VERFAHREN ZUR SCHÄTZUNG DES ETHANOLSTANDES IN EINEM BRENNSTOFF

METHOD FOR ESTIMATING THE LEVEL OF ETHANOL IN A FUEL

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **25.04.2007 FR 0703001**

(43) Date de publication de la demande:
**30.12.2009 Bulletin 2009/53**

(73) Titulaire: **Renault SAS
92100 Boulogne Billancourt (FR)**

(72) Inventeurs:
• **EMERY, Pascal
F-91120 Palaiseau (FR)**
• **NAVARRO, Marcos
F-75014 Paris (FR)**

(56) Documents cités:
**EP-A- 1 304 466      US-A- 4 993 386
US-A- 5 018 483      US-A- 5 150 683**

**Description**

L'invention se situe dans le domaine des moteurs à combustion interne (essence), à injection directe ou indirecte de carburant, à N nombre de cylindres.

Elle concerne plus précisément l'estimation du taux d'éthanol du carburant injecté, trouvé à partir de la détermination des début et fin de combustion d'un carburant injecté dans un moteur à combustion interne, sur un nombre n de cycles (n étant un entier supérieur ou égal à 1) de déplacement d'un piston dans un cylindre.

Les normes antipollution devenant de plus en plus sévères, il est important pour les constructeurs automobiles de bien maîtriser le pilotage de l'injection de carburant dans leurs moteurs pour limiter les émissions polluantes.

L'un des paramètres importants sur ces systèmes d'injection est la nature du carburant.

Notamment pour les moteurs essence, l'émergence de système de combustion à base de "flex fuel" ou carburants issus du mélange d'essence et d'éthanol complexifie considérablement les réglages de bases définis pendant la calibration du moteur.

La concentration d'éthanol dans le carburant varie énormément selon les réglementations en vigueur dans les différents pays.

Cette concentration conditionne les propriétés d'auto-inflammation du carburant, autrement dit le délai d'auto-inflammation. Ce délai est important car il conditionne le phasage de la combustion dans le cycle thermodynamique, par rapport à une consigne d'avance à l'allumage donnée. Une combustion mal phasée entraînera une élévation des émissions polluantes.

Il rend également plus sévères les conditions de démarrage à froid.

Il est donc très important de prendre en compte de manière précise la nature du carburant présent dans le réservoir pour le réglage des moteurs.

Actuellement, cette concentration d'éthanol dans le carburant est prise en compte lors de la mise au point du moteur. Ceci est effectué en utilisant deux carburants de référence, par exemple un premier constitué d'essence pure et un second contenant 85 % d'éthanol, les 15 % restant étant constitués d'essence.

Deux mises au point complètes sont établies pour définir les réglages moteurs de manière optimale, pour chaque carburant.

En fonctionnement, si le véhicule est utilisé avec un autre carburant (c'est-à-dire avec une concentration d'éthanol différente), le moteur ne fonctionne plus avec ses réglages optimums.

Le contrôle moteur utilise alors l'information richesse, pour calculer une image du taux d'alcool. Ensuite, une interpolation est faite pour chaque paramètre de réglage entre les deux mises au point initiales.

Des solutions pour estimer une grandeur caractéristique du début de combustion ont fait l'objet de demandes de brevet français au nom du présent demandeur, à savoir les demandes 05 07745 et 06 07041, cette dernière n'étant pas publiée à la date de dépôt de la présente demande.

Un objet de la présente invention est de proposer un procédé d'estimation du taux d'éthanol du carburant injecté, trouvé à partir de la détermination des début et fin de combustion d'un carburant injecté dans un moteur à combustion interne, sur un nombre n de cycles (n étant un entier supérieur ou égal à 1) de déplacement d'un piston dans un cylindre.

Pour atteindre cet objet, l'invention propose un procédé d'estimation du taux d'éthanol d'un carburant injecté dans un moteur à combustion interne, sur un nombre n de cycles (n étant un entier supérieur ou égal à 1) de déplacement d'un piston dans un cylindre, caractérisé par le fait qu'il comprend les étapes suivantes :

- déterminer un début de combustion d'un carburant injecté pour chacun des cycles;
- calculer l'angle moyen de début de combustion « $\theta_{\text{début moy}}$ » à partir des « $\theta$ » de début de combustion relevés pour l'ensemble des n cycles ;
- déterminer une fin de combustion d'un carburant injecté pour chacun des cycles ;
- calculer l'angle moyen de fin de combustion « $\theta_{\text{fin moy}}$ » à partir des « $\theta$ » de fin de combustion relevés pour l'ensemble des n cycles ;
- calculer le délai de combustion entre le temps début de combustion trouvé à partir de « $\theta_{\text{début moy}}$ » et le temps fin de combustion trouvé à partir de « $\theta_{\text{fin moy}}$ » ;
- déduire le taux d'éthanol à partir du délai de combustion, sur la base d'un modèle déterminé ou d'une liste de correspondance entre des délais de combustion et des taux d'éthanol.

Selon d'autres caractéristiques avantageuses et non limitatives de ce procédé :

- ledit taux d'éthanol est mis en mémoire jusqu'à l'apprentissage d'un taux d'éthanol différent ;
- pour différents angles successifs que prend le vilebrequin du moteur dans chaque cycle, on évalue une variable

"$C_\theta$" à un angle "θ" du vilebrequin dans la chambre de combustion du cylindre, "$C_\theta$" étant basé sur la dérivée angulaire $\dfrac{dQ}{d\theta}$ de la quantité d'énergie « Q » à un angle « θ », et l'on calcule la valeur d'angle CA10 qui est égale à l'angle où $Q = \int \dfrac{dQ}{d\theta}$ atteint 10% de son amplitude maximale AM, cette valeur CA10 étant enregistrée comme étant la valeur angulaire de début de combustion pour le cycle considéré ;

- pour différents angles successifs que prend le vilebrequin du moteur dans chaque cycle, on évalue une variable "$C_\theta$" à un angle "θ" du vilebrequin dans la chambre de combustion du cylindre, "$C_\theta$" étant basé sur la dérivée angulaire $\dfrac{dQ}{d\theta}$ de la quantité d'énergie « Q » à un angle « θ », et l'on calcule la valeur d'angle CA90 qui est égale à l'angle où $Q = \int \dfrac{dQ}{d\theta}$ atteint 90% de son amplitude maximale AM, cette valeur CA90 étant enregistrée comme étant la valeur angulaire de fin de combustion pour le cycle considéré ;

- ladite amplitude maximale AM est mesurée en établissant la différence entre :

    o les valeurs maximale et minimale de Q ;
    ou
    o la valeur maximale de Q et zéro ;
    ou
    o zéro ou la valeur minimale de Q, et l'angle de fin d'intégration de Q si celui-ci correspond à la valeur maximale de Q ;

- ladite variable "$C_\theta$" est calculée à partir de l'expression suivante :

$$- \quad \frac{dQ}{d\theta} = \frac{V}{\gamma - 1}\left(\frac{p}{T}\frac{dT}{d\theta}\right) + p\frac{dV}{d\theta}$$

    o « p » étant la pression dans le cylindre à l'angle « θ »,
    o « V » étant le volume de la chambre de combustion à l'angle « θ »,
    o « T » étant la température dans la chambre de combustion à l'angle « θ »,
    o « $\gamma$ » étant le rapport de chaleur spécifiques « $c_p/c_v$ ».

D'autres caractéristiques et avantages de l'invention apparaîtront à la lecture de la description détaillée qui va suivre d'un mode de réalisation préféré de l'invention.
Cette description sera faite en référence aux dessins annexés dans lesquels :

- la figure 1 représente schématiquement une vue en coupe d'un cylindre d'un moteur à combustion en fonctionnement ;
- la figure 2 est une représentation schématique de l'évolution de la variable "EOC-SOC" en fonction du nombre de points, qui permet de déterminer le taux d'éthanol dans un carburant considéré.

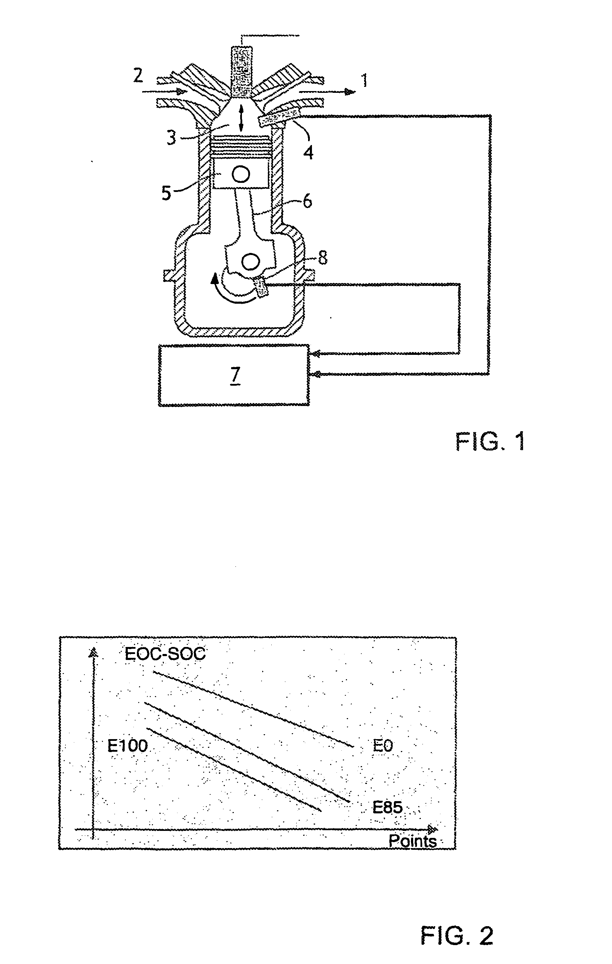

En référence à la figure 1, un dispositif selon l'invention y est illustré. Il s'applique à un moteur à combustion interne Essence comportant un piston mobile 5, une bielle 6, une chambre de combustion 3, un dispositif d'admission de gaz 2, un dispositif d'échappement de gaz 1, un moyen de mesure apte à mesurer différents angles « θ » de rotation du vilebrequin 8, un capteur de pression 4 placé dans la chambre de combustion 3, et des moyens de traitement 7 aptes à recevoir les signaux provenant dudit capteur de pression 4 et du moyen de mesure 8, à synchroniser ces signaux pour pouvoir les corréler, et à traiter ces signaux pour mettre en oeuvre un procédé selon l'invention.
Lors du fonctionnement du moteur, une estimation du taux d'éthanol selon l'invention est faite. Elle s'effectue avantageusement dans des conditions de fonctionnement fixées à l'avance lors de la mise au point du moteur.
Le taux d'éthanol du carburant est estimé, comme on le verra plus loin, en tenant compte de la vitesse de combustion, à savoir le temps qui s'écoule entre le moment où la combustion démarre et le moment où elle finit.

Les conditions d'activation propices à la mise en oeuvre de la présente invention sont les points de fonctionnement de préférence à charge moteur élevée pour une estimation de début et de fin de combustion plus aisée. Néanmoins, il paraît également intéressant de choisir des phases telles que le démarrage moteur (en s'assurant des conditions extérieures propices), phase pendant laquelle la nature du carburant est primordiale. L'ensemble de ces conditions d'activation peut prendre la forme d'un point de fonctionnement du moteur ou de plusieurs. Un apprentissage peut être aussi demandé à chaque remplissage du réservoir. Les conditions d'activation sont alors attendues pour lancer l'apprentissage.

Lorsque les conditions d'activation sont reconnues (c'est-à-dire que le moteur se trouve sous l'action du conducteur sur le ou l'un des points de fonctionnement identifié), on effectue une détection de début et de fin de combustion sur n cycles thermodynamiques (n peut être égal à 1).

Il est donc avant tout essentiel de déterminer les moments de début de la combustion (encore noté « SOC ») et de fin de combustion (ou « EOC »).

Une détermination possible du SOC et du EOC est basée sur le calcul et l'analyse d'une variable $C_\theta$, image de la combustion.

La méthodologie exposée ci-après l'est également dans la demande précitée 06 07041.

A partir de la valeur de pression $p_\theta$ régnant dans la chambre de combustion, et de la valeur de la position angulaire $\theta$ du vilebrequin, qui ont été mesurées lors d'une première étape, une variable $C_\theta$ est en permanence calculée lors d'une étape ultérieure.

$C_\theta$ est fonction d'une évolution angulaire de la quantité d'énergie « Q » dégagée par la combustion dans la chambre de combustion 3 à un angle $\theta$.

Cette évolution angulaire de la quantité d'énergie est avantageusement la dérivée $\dfrac{dQ}{d\theta}$.

Cette valeur Ce est calculée en permanence sur la base du dégagement d'énergie dans le cylindre, pour un angle $\theta$ évoluant entre -180° et +180° (i.e. dans un demi-cycle), ou dans un intervalle plus réduit.

Selon une première possibilité, Ce se calcule à partir de :

$$C = \frac{1}{F}\frac{dQ}{D\theta}(1)$$

où « Q » est l'énergie dans le cylindre,

« $\theta$ » est l'angle vilebrequin, et

« F » est une fonction de « $\theta$ » telle que « F » est maximale au point mort bas (encore noté PMB), minimale au point mort haut (encore noté PMH), monotone entre les deux, et toujours strictement positive.

Une fonction "triangle" possède de telles propriétés, et peut être définie de la façon suivante :

$$F = F_0 + K.|\theta|\ (2)$$

où « K » et « $F_0$ » sont des constantes.

En pratique, le calcul du dégagement d'énergie $\dfrac{dQ}{d\theta}$ donne une information bruitée.

L'effet d'une telle fonction « F » est d'atténuer le signal de dégagement d'énergie dans les zones où il est le plus bruité (du coté du PMB), par rapport aux zones où il est susceptible de contenir l'information qui intéresse (du coté du PMH).

Cette opération augmente donc le rapport signal sur bruit et diminue les contraintes sur le filtrage de la pression à mettre en place.

Selon une deuxième possibilité, Ce se calcule à partir de l'expression simplifiée du dégagement d'énergie volumique dans le cylindre suivante :

$$C = \frac{1}{V}\frac{dQ}{d\theta} \quad (3)$$

où V représente le volume de la chambre de combustion 3 pour un angle $\theta$.

Comme le volume varie cycliquement avec $\theta$, la multiplication par $\frac{1}{V}$ a pour avantage de diminuer l'amplitude du bruit sur le dégagement d'énergie là où il est typiquement le plus fort (vers les PMB). Ce calcul amplifie aussi le signal là où il est utile pour la détection du SOC et du EOC (typiquement rencontrés au voisinage du PMH).

Cette opération augmente donc le rapport signal sur bruit et diminue les contraintes sur le filtrage de la pression à mettre en place.

En pratique, le calcul de $\frac{dQ}{d\theta}$ peut s'avérer complexe et peut donc nécessiter de la puissance de calcul pour être réalisé tel quel dans un système électronique embarqué de contrôle moteur. Mais la division par le volume est intéressante car elle permet de réaliser les simplifications exposées ci-après.

On part de l'expression, bien connue de l'homme du métier, du dégagement d'énergie apparent $\frac{dQ}{d\theta}$ du gaz présent dans la chambre :

$$\frac{dQ}{d\theta} = \frac{1}{\gamma-1}V\left(\frac{p}{m}\frac{dm}{d\theta} + \frac{p}{T}\frac{dT}{d\theta} - \frac{p}{V}\frac{dV}{d\theta}\right) + \frac{\gamma}{\gamma-1}p\frac{dV}{d\theta} \quad (4)$$

avec :

- Q : quantité d'énergie présente dans les gaz de la chambre de combustion 3 ;
- $\theta$ : angle vilebrequin ;
- $\gamma$ rapport des chaleurs spécifiques ($c_p$ et $c_v$) ;
- V : volume de la chambre de combustion à $\theta$ ;
- p : pression dans la chambre de combustion à $\theta$ ;
- m : masse de gaz enfermés dans le cylindre à $\theta$ ;
- T : température dans la chambre de combustion à $\theta$.

Il est à noter que l'expression (4) pourrait être écrite en remplaçant $\theta$ par le temps t.
Il est toutefois préféré l'utilisation de l'angle $\theta$, car le système devient alors indépendant de la vitesse de rotation du moteur.
Il est à noter par ailleurs que l'expression (4) prise comme point de départ contient la dérivée angulaire de la température et non pas la dérivée de la pression.
Ceci va permettre de minimiser le bruit, car la dérivée de la pression p mesurée introduit un bruit important dans le résultat.
Avantageusement, seules la pression p et l'angle $\theta$ sont des valeurs mesurées par le dispositif selon la figure 1.
Les autres variables de l'expression (4) sont négligées ou estimées, comme nous allons le voir.
Concernant la masse m, l'hypothèse est prise de la considérer comme constante (la masse injectée est donc négligée). L'expression de C devient alors :

$$C_\theta = \frac{1}{V}\frac{dQ}{d\theta} = \frac{1}{\gamma-1}\left(\frac{p}{T}\frac{dT}{d\theta}\right) + \frac{p}{V}\frac{dV}{d\theta} \quad (5)$$

Le rapport des chaleurs spécifiques $\gamma$ est considéré constant avant la combustion ainsi que dans les premiers instants de la combustion. On pourra par exemple l'estimer égal à 1,4.

Pour une géométrie donnée d'un moteur, il y a une relation immuable entre le volume V et l'angle θ. Pour estimer le volume V et sa dérivée $\dfrac{dV}{d\theta}$, une table de valeurs donnant le volume V pour différentes valeurs de θ est utilisée.

La température T et sa dérivée $\dfrac{dT}{d\theta}$ sont calculées sur la base desdits volume V et pression p.

Selon un premier mode de calcul de T, on suppose que le gaz est parfait. On peut alors écrire à tout moment :

$$\frac{pV}{T} = mr = \text{constante} \quad (6)$$

Donc à deux instants ou à deux angles différents :

$$\frac{p_\theta V_\theta}{T_\theta} = \frac{p_0 V_0}{T_0} \quad (7)$$

On en déduit :

$$T_\theta = T_0 \frac{p_\theta V_\theta}{p_0 V_0} \quad (8)$$

avec :

T_0, p_0, V_0 : température, pression et volume initiaux (i.e. à la fermeture de la soupape d'admission)
T_θ, p_θ, V_θ : température, pression et volume à l'angle θ

La température est donc estimée pour chaque valeur de l'angle θ, à partir de conditions initiales de pression, température et volume en début de cycle, de préférence juste après la fermeture de la soupape d'admission.
On pourra prendre la température initiale constante et égale à 300K, ou bien la faire dépendre de la température d'air admis, si on la mesure.

Cette méthode peut être préférée car elle nécessite peu de calculs, étant donné que $\dfrac{T_0}{p_0 V_0}$ n'est calculé qu'une seule fois par cycle et qu'il suffit de multiplier ce résultat par $p_\theta V_\theta$ à chaque nouvelle valeur de l'angle θ.
Selon un deuxième mode de calcul de T, on suppose aussi que le gaz est parfait (pV = mrT, où mr est contant), mais on en déduit cette fois :

$$\frac{1}{T}\frac{dT}{d\theta} = \frac{1}{p}\frac{dp}{d\theta} + \frac{1}{V}\frac{dV}{d\theta} \quad (9)$$

Cette expression pourrait être réintroduite dans l'expression de $C_\theta$, mais cela ferait réapparaître la dérivée de la pression $\dfrac{dp}{d\theta}$, qui est une source de bruit pour le calcul.

Un autre moyen pour exprimer $\dfrac{1}{T}\dfrac{dT}{d\theta}$ sera donc préféré.

Pour cela, l'expression (9) est discrétisée, et les valeurs prises par V, p, T sont considérées aux angles θ et θ-

$\Delta\theta$, où $\Delta\theta$ est constant et représente le pas du calcul. L'expression (9) devient alors :

$$\frac{1}{T_\theta}\frac{T_\theta - T_{\theta-\Delta\theta}}{\Delta\theta} = \frac{1}{p_\theta}\frac{p_\theta - p_{\theta-\Delta\theta}}{\Delta\theta} + \frac{1}{V_\theta}\frac{V_\theta - V_{\theta-\Delta\theta}}{\Delta\theta} \quad (10)$$

L'expression suivante de la température T à l'angle $\theta$ est alors déduite, en fonction de la température à l'angle $\theta$-$\Delta\theta$ :

$$T_\theta = T_{\theta-\Delta\theta}\left(\frac{1}{\dfrac{p_{\theta-\Delta\theta}}{p_\theta} + \dfrac{V_{\theta-\Delta\theta}}{V_\theta} - 1}\right) \quad (11)$$

La température est donc estimée de manière récursive pour chaque valeur de l'angle $\theta$, à partir d'une température initiale correspondant à la température dans le cylindre à l'instant de la fermeture de la soupape d'admission. Elle peut être prise constante et égale à 300K, ou bien dépendante d'une température d'air admis mesurée par des moyens appropriés.

Pour terminer, l'expression de $C_\theta$ est également discrétisée, et la valeur de $C_\theta$ pour chaque valeur de $\theta$ est donnée par la formule :

$$C_\theta = \frac{1}{\gamma - 1}\left(\frac{p_\theta}{T_\theta}\frac{T_\theta - T_{\theta-\Delta\theta}}{\Delta\theta}\right) + \frac{p_\theta}{V_\theta}\frac{V_\theta - V_{\theta-\Delta\theta}}{\Delta\theta} \quad (12)$$

En outre, l'expression (9), (11) ou (12) peut être encore plus simplifiée, en termes de calcul, en simplifiant l'expression de V (ou $V_\theta$).

En effet, comme il est dit plus haut, la loi de volume V, qui est immuable pour une géométrie de moteur donnée, peut être déterminée par une table de valeurs, associant à chaque valeur de $\theta$ une valeur de volume.

Dans un système embarqué, il est cependant intéressant de diminuer la taille des tables de valeurs car elles consomment des ressources de mémoire. La simplification exposée ci-après va permettre pour le moins de diminuer la taille de tables de valeurs en mémoire, et pour le plus de s'en affranchir.

Plutôt que d'utiliser le volume vrai dans les calculs exposés précédemment, on lui substituera une loi parabolique Vp donnée par l'expression : $V_p = V_0 + Kp\theta^2$ ,
où $V_0$ est constant et est le volume au PMH (volume mort), Kp un coefficient à ajuster de telle façon que la courbe de $V_p$ soit très proche de la courbe de V au voisinage du PMH.

Vp peut ainsi être partout substitué à V (ou $V_\theta$) dans les calculs exposés précédemment : pour le calcul des températures $T_\theta$ et $T_{\theta-\Delta\theta}$, et dans le terme $\dfrac{p_\theta}{V_\theta}\dfrac{V_\theta - V_{\theta-\Delta\theta}}{\Delta\theta}$ .

Du temps de calcul est ainsi gagné et des ressources sont économisées.

Conformément à l'invention, le calcul de fin de combustion "EOC" peut être effectué par l'intermédiaire du calcul du "CA90", plutôt que par l'estimation de la fin de combustion selon la méthode présentée plus haut.

"CA90" est l'angle du vilebrequin, pour un cycle déterminé, où 90 % de la charge présente dans la chambre de combustion a été brûlée.

Il correspond à l'angle où $Q = \int \dfrac{dQ}{d\theta}$ (ou Q et $\theta$ sont tels qu'explicité plus haut) atteint 90 % de son amplitude maximale AM.

Cette amplitude maximale AM peut être mesurée en faisant la différence entre :

- les valeurs maximale et minimale de Q ;
  ou
- la valeur maximale de Q et zéro ;
  ou
- zéro ou la valeur minimale de Q, et l'angle de fin d'intégration de Q si celui-ci correspond à la valeur maximale de Q.

Une fois les SOC et EOC détectés, les angles vilebrequin correspondants sont enregistrés.

Les valeurs de ces n angles sont mémorisées et leurs moyennes sont effectuées.

La différence de ces deux valeurs EOC - SOC est une image de la vitesse de combustion.

La valeur EOC - SOC calculée est injectée dans une cartographie du type de l'exemple de la figure 2 annexée.

La sortie de cette cartographie fournit le taux d'éthanol du carburant en train d'être consommé.

La valeur issue de la cartographie précitée est mise en mémoire dans des moyens appropriés jusqu'à l'apprentissage d'un taux d'éthanol différent.

Les calibrations du système de contrôle moteur sont alors adaptées à cette valeur de taux d'éthanol (cartographies d'avance à l'allumage par exemple) pour garantir un fonctionnement optimal du moteur.

L'estimation de la vitesse de combustion EOC - SOC peut être effectuée par l'intermédiaire du calcul du CA10, plutôt que par l'estimation du début de combustion selon la méthode présentée plus haut.

Le CA10 est l'angle où 10 % de la charge présente dans la chambre de combustion a été brûlée. Il correspondant à l'angle où $Q = \int \dfrac{dQ}{d\theta}$ atteint 10 % de son amplitude maximale AM.

Cette amplitude maximale AM peut être mesurée en faisant la différence entre :

- les valeurs maximale et minimale de Q ;
  ou
- la valeur maximale de Q et zéro ;
  ou
- zéro ou la valeur minimale de Q, et l'angle de fin d'intégration de Q si celui-ci correspond à la valeur maximale de Q.

## Revendications

1. Procédé d'estimation du taux d'éthanol d'un carburant injecté dans un moteur à combustion interne, sur un nombre n de cycles (n étant un entier supérieur ou égal à 1) de déplacement d'un piston (5) dans un cylindre, **caractérisé par le fait qu'**il comprend les étapes suivantes :

   - déterminer un début de combustion d'un carburant injecté pour chacun des cycles ;
   - calculer l'angle moyen de début de combustion « $\theta_{\text{début moy}}$ » à partir des « $\theta$ » de début de combustion relevés pour l'ensemble des n cycles ;
   - déterminer une fin de combustion d'un carburant injecté pour chacun des cycles ;
   - calculer l'angle moyen de fin de combustion « $\theta_{\text{fin moy}}$ » à partir des
   « $\theta$ » de fin de combustion relevés pour l'ensemble des n cycles ;
   - calculer le délai de combustion entre le temps début de combustion trouvé à partir de « $\theta_{\text{début moy}}$ » et le temps fin de combustion trouvé à partir de « $\theta_{\text{fin moy}}$ » ;
   - déduire le taux d'éthanol à partir du délai de combustion, sur la base d'un modèle déterminé ou d'une liste de correspondance entre des délais de combustion et des taux d'éthanol.

2. Procédé selon la revendication 1, **caractérisé par le fait que** ledit taux d'éthanol est mis en mémoire jusqu'à l'apprentissage d'un taux d'éthanol différent.

3. Procédé selon la revendication 1 ou 2, **caractérisé par le fait que** pour différents angles successifs que prend le vilebrequin (8) du moteur dans chaque cycle, on évalue une variable "$C_\theta$" à un angle "$\theta$" du vilebrequin (8) dans la chambre de combustion du cylindre, "$C_\theta$" étant basé sur la dérivée angulaire $\dfrac{dQ}{d\theta}$ de la quantité d'énergie « Q » à un angle « θ », et que l'on calcule la valeur d'angle CA10 qui est égale à l'angle où $Q = \int \dfrac{dQ}{d\theta}$ atteint 10% de son amplitude maximale AM, cette valeur CA10 étant enregistrée comme étant la valeur angulaire de début de combustion pour le cycle considéré.

4. Procédé selon l'une des revendications 1 à 3, **caractérisé par le fait que**, pour différents angles successifs que prend le vilebrequin (8) du moteur dans chaque cycle, on évalue une variable "$C_\theta$" à un angle "θ" du vilebrequin (8) dans la chambre de combustion du cylindre, "$C_\theta$" étant basé sur la dérivée angulaire $\dfrac{dQ}{d\theta}$ de la quantité d'énergie « Q » à un angle « θ », et que l'on calcule la valeur d'angle CA90 qui est égale à l'angle où $Q = \int \dfrac{dQ}{d\theta}$ atteint 90% de son amplitude maximale AM, cette valeur CA90 étant enregistrée comme étant la valeur angulaire de fin de combustion pour le cycle considéré.

5. Procédé selon l'une des revendications 3 et 4, **caractérisé par le fait que** ladite amplitude maximale AM est mesurée en établissant la différence entre

> - les valeurs maximale et minimale de Q ;
> ou
> - la valeur maximale de Q et zéro ;
> ou
> - zéro ou la valeur minimale de Q, et l'angle de fin d'intégration de Q si celui-ci correspond à la valeur maximale de Q.

6. Procédé selon l'une des revendications 3 à 5, **caractérisé par le fait que** ladite variable "$C_\theta$" est calculée à partir de l'expression suivante :

$$\frac{dQ}{d\theta} = \frac{V}{\gamma - 1}\ \frac{p}{T}\frac{dT}{d\theta}\ + p\frac{dV}{d\theta}$$

« $p$ » étant la pression dans le cylindre à l'angle « θ »,
« $V$ » étant le volume de la chambre de combustion à l'angle « θ »,
« $T$ » étant la température dans la chambre de combustion à l'angle « θ », « $\gamma$ » étant le rapport de chaleur spécifiques « $c_p/c_v$ ».

**Claims**

1. Method for estimating the ethanol content of a fuel injected into an internal combustion engine, over a number n of cycles (n being an integer greater than or equal to 1) of displacement of a piston (5) in a cylinder, **characterized in that** it comprises the following steps:

> - determining a start of combustion of a fuel injected for each of the cycles;
> - calculating the mean start of combustion angle "$\theta_{mean\ start}$" from the start of combustion "$\theta$" values recorded for the set of n cycles;
> - determining an end of combustion of a fuel injected for each of the cycles;
> - calculating the mean end of combustion angle "$\theta_{mean\ end}$" from the end of combustion "$\theta$" values recorded for the set of n cycles;
> - calculating the combustion delay between the start of combustion time found from "$\theta_{mean\ start}$" and the end of combustion time found from "$\theta_{mean\ end}$" ;
> - deducing the ethanol content from the combustion delay, on the basis of a determined model or of a look-up list providing the relationship between the combustion delays and the ethanol contents.

**2.** Method according to Claim 1, **characterized in that** said ethanol content is stored in memory until a different ethanol content is learnt.

**3.** Method according to Claim 1 or 2, **characterized in that**, for various successive angles that the crankshaft (8) of the engine adopts within each cycle, a variable "$C_\theta$" is evaluated at an angle "$\theta$" of the crankshaft (8) in the combustion chamber of the cylinder, "$C_\theta$" being based on the angular derivative $\dfrac{dQ}{d\theta}$ of the quantity of energy "$Q$" at an angle "$\theta$", and that the angular value CA10, which is equal to the angle at which

$$Q = \int \frac{dQ}{d\theta}$$ reaches 10% of its maximum amplitude AM is calculated, this value CA10 being recorded as being the start of combustion angular value for the cycle in question.

**4.** Method according to one of Claims 1 to 3, **characterized in that**, for various successive angles that the crankshaft (8) of the engine adopts within each cycle, a variable "$C_\theta$" is evaluated at an angle "$\theta$" of the crankshaft (8) in the combustion chamber of the cylinder, "$C_\theta$" being based on the angular derivative $\dfrac{dQ}{d\theta}$ of the quantity of energy "$Q$"

at an angle "$\theta$", and that the angular value CA90, which is equal to the angle at which $Q = \int \dfrac{dQ}{d\theta}$ reaches 90% of its maximum amplitude AM is calculated, this value CA90 being recorded as being the end of combustion angular value for the cycle in question.

**5.** Method according to one of Claims 3 and 4, **characterized in that** said maximum amplitude AM is measured by establishing the difference between:

   - the maximum and minimum values of $Q$;
   or
   - the maximum value of $Q$ and zero;
   or
   - zero or the minimum value of $Q$, and the angle at the end of integration of $Q$ if this corresponds to the maximum value of $Q$.

**6.** Method according to one of Claims 3 to 5, **characterized in that** said variable "$C_\theta$" is calculated from the following expression:

$$\frac{dQ}{d\theta} = \frac{V}{\gamma - 1} \frac{p}{T} \frac{dT}{d\theta} + p \frac{dV}{d\theta}$$

"$p$" being the pressure in the cylinder at the angle "$\theta$",
"$V$" being the volume of the combustion chamber at the angle "$\theta$",
"$T$" being the temperature in the combustion chamber at the angle "$\theta$",
"$\gamma$" being the ratio of specific heat capacities "$c_p/c_v$"

**Patentansprüche**

**1.** Verfahren zum Schätzen des Ethanolanteils eines in eine Brennkraftmaschine eingespritzten Kraftstoffs über eine Anzahl n von Verlagerungszyklen (wobei n eine ganze Zahl größer oder gleich 1 ist) eines Kolbens (5) in einem Zylinder, **dadurch gekennzeichnet, dass** es die folgenden Schritte umfasst:

   - Bestimmen eines Verbrennungsbeginns eines eingespritzten Kraftstoffs für jeden der Zyklen;

- Berechnen des mittleren Winkels "$\theta_{début\,moy}$" des Verbrennungsbeginns anhand der Winkel "$\theta$" des Verbrennungsbeginns, die für sämtliche n Zyklen ermittelt werden;
- Bestimmen eines Verbrennungsendes eines eingespritzten Kraftstoffs für jeden der Zyklen;
- Berechnen des mittleren Winkels "$\theta_{fin\,moy}$" des Verbrennungsendes anhand der Winkel "$\theta$" des Verbrennungsendes, die für sämtliche n Zyklen ermittelt werden;
- Berechnen der Verbrennungsverzögerung zwischen der Verbrennungsbeginn-Zeit, die anhand von "$\theta_{début\,moy}$"ermittelt wird, und der Verbrennungsende-Zeit, die anhand von "$\theta_{fin\,moy}$" ermittelt wird;
- Ableiten des Ethanolanteils anhand der Verbrennungsverzögerung auf der Grundlage eines bestimmten Modells oder einer Korrespondenzliste zwischen den Verbrennungsverzögerungen und den Ethanolanteilen.

2. Verfahren nach Anspruch 1, **dadurch gekennzeichnet, dass** der Ethanolanteil im Speicher abgelegt wird, bis ein anderer Ethanolanteil gelernt wird.

3. Verfahren nach Anspruch 1 oder 2, **dadurch gekennzeichnet, dass** für verschiedene aufeinander folgende Winkel, die die Kurbelwelle (8) der Maschine in jedem Zyklus annimmt, eine Variable "$C_\theta$" bei einem Winkel "$\theta$" der Kurbelwelle (8) in der Verbrennungskammer des Zylinders bewertet wird, wobei "$C_\theta$" auf der Ableitung $dQ/d\theta$ der Energiemenge "Q" nach dem Winkel bei einem Winkel "$\theta$" basiert, und dass der Winkelwert CA10, der gleich dem Winkel ist, bei dem $Q = \int \frac{dQ}{d\theta}$ 10% ihrer maximalen Amplitude AM erreicht, berechnet wird, wobei dieser Wert CA10 als der Winkelwert des Verbrennungsbeginns für den betrachteten Zyklus aufgezeichnet wird.

4. Verfahren nach einem der Ansprüche 1 bis 3, **dadurch gekennzeichnet, dass** für verschiedene aufeinander folgende Winkel, die die Kurbelwelle (8) der Maschine in jedem Zyklus annimmt, eine Variable "$C_\theta$" bei einem Winkel "$\theta$" der Kurbelwelle (8) in der Verbrennungskammer des Zylinders bewertet wird, wobei "$C_\theta$" auf der Ableitung $dQ/d\theta$ der Energiemenge "Q" nach dem Winkel bei einem Winkel "$\theta$" basiert, und dass der Winkelwert CA90, der gleich dem Winkel ist, bei dem $Q = \int \frac{dQ}{d\theta}$ 90 % seiner maximalen Amplitude AM erreicht, berechnet wird, wobei dieser Wert CA90 als der Winkelwert des Verbrennungsendes für den betrachteten Zyklus aufgezeichnet wird.

5. Verfahren nach einem der Ansprüche 3 und 4, **dadurch gekennzeichnet, dass** die maximale Amplitude AM gemessen wird durch Bilden der Differenz zwischen:

   - den Maximal- und Minimalwerten von Q;
   oder
   - dem Maximalwert von Q und null;
   oder
   - null oder dem Minimalwert von Q und dem Winkel des Integrationsendes von Q, falls dieser dem Maximalwert von Q entspricht.

6. Verfahren nach einem der Ansprüche 3 bis 5, **dadurch gekennzeichnet, dass** die Variable "$C_\theta$" anhand des folgenden Ausdrucks berechnet wird:

$$\frac{dQ}{d\theta} = \frac{V}{\gamma - 1} \frac{p}{T} \frac{dT}{d\theta} + p \frac{dV}{d\theta}$$

wobei
"p" der Druck im Zylinder bei dem Winkel "$\theta$" ist,
"V" das Volumen der Verbrennungskammer bei dem Winkel "$\theta$" ist,
"T" die Temperatur in der Verbrennungskammer bei dem Winkel "$\theta$" ist und
"$\gamma$" das Verhältnis der spezifischen Wärmen "$c_p/c_v$" ist.

FIG. 1

FIG. 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 0507745

- FR 0607041